# EUROPÄISCHE PATENTSCHRIFT

(11) **EP 0 447 515 B1**
(45) Veröffentlichungstag und Bekanntmachung des Hinweises auf die Patenterteilung: **08.12.1993**
(21) Anmeldenummer: 90914504.7
(22) Anmeldetag: 04.10.1990
(51) Int. Cl.: G01D 18/00, G01D 5/06

(54) **VORRICHTUNG ZUM ANALOGEN AUSLÖSEN EINES DIGITALEN EINSTELLVORGANGES**
DEVICE FOR THE ANALOG TRIGGERING OF A DIGITAL ADJUSTMENT PROCESS
DISPOSITIF DE DECLENCHEMENT ANALOGIQUE D'UN PROCESSUS DE REGLAGE NUMERIQUE

(30) Priorität: 06.10.1989 DE 3933381
(43) Veröffentlichungstag der Anmeldung: 25.09.1991
(73) Patentinhaber: Endress u. Hauser GmbH u. Co., D-79689 Maulburg (DE)
(72) Erfinder: MAIER, Winfried, D-7864 Maulburg (DE); PFÜNDLIN, Elmar, D-7850 Lörrach 7 (DE)
(86) Internationale Anmeldenummer: DE9000755
(87) Internationale Veröffentlichungsnummer: WO9105223

(56) Entgegenhaltungen:
- EP-A- 0 324 067
- US-A- 4 408 896

## Beschreibung

Die Erfindung betrifft eine Vorrichtung zum analogen Auslösen eines digitalen Einstellvorganges und/oder der Kalibrierung von, mit Microprozessoren ausgestatte- ten Meßwertaufnehmern mit einer, die Außenwand eines Gehäuses, in dessen Innenraum sich die elektrischen/elektronischen Teile des Meßwertaufnehmers befinden, durchdringenden Einstellwelle, und mindestens einem, auf der Leiterplatte angeordnetem elektrischen Schaltelement.

Solche Einstellvorgänge sind insbesondere bei Meßwertaufnehmern notwendig, welche die Aufgabe haben, pyhsikalische und/ oder chemische Werte eines Prozesses zu ermitteln, in ein elektrisches Signal umzuwandeln, und an ein Auswertegerät oder eine Informationsverarbeitungszentrale zu übertragen. So werden solche Meßwertaufnehmer dazu verwandt, den Druck, den Füllstand, die Temperatur, die Feuchtigkeit, die Menge eines fließenden Schüttstromes oder einer Flüssigkeit, den Ionen-Gleichgewichtszustand (Redox-Potential), oder ähnliche während eines Prozesses auftretende physikalische und/oder chmische Größen zu ermitteln. Dazu sind die Meßwertaufnehmer mit einer Leitung verbunden , über welche die elektrischen Signale zu dem Auswertegerät oder zu einer Informationsverarbeitungszentrale und auch die, zur Funktion des Meßwertaufnehmers notwendige, elektrische Energie von dem Auswertegerät, oder der Informationsverarbeitungszentrale zu dem Meßwertaufnehmer übertragen wird.

Die Überwachung komplexer Prozessvorgänge machen es dabei sehr oft notwendig, auch das Auswertegerät in unmittelbarer Nähe des Prozesses anzuordnen, dessen physikalische und/oder chemische Werte überwacht werden sollen. Das hat zum Nachteil, daß der, meist außerhalb der das Meßmedium umschließenden Wandung, angeordnete elektronische Teil des Meßwertaufnehmers,als auch das Auswertegerät explosibler oder aggressiver oder anderer, auf die Funktionsfähigkeit einwirkende Atmosphäre ausgesetzt sind.

Es ist deshalb notwendig, daß sowohl der elektronische Teil des Meßwertaufnehmers als auch das Auswertegerät von einer, gegenüber der explosiblen oder agressiven Atmosphäre abschließenden Wandung umgeben ist.

Andererseits ist es notwendig, die Meßwertaufnehmer am Einsatzort auf den, den Einsatzbedingungen entsprechenden Meßbereich einzustellen sowie zu kalibrieren. D. h. den Nullpunkt entsprechend den Prüfnormalien einzustellen. Die hierfür notwendigen Einstelleinrichtungen sind im elektronischen Teil der Meßwertaufnehmer vorhanden. Bisher geschah dies analog, meist durch Verstellen von Spindel- oder Drehwiderständen. Die, mit der Einführung moderner Microelektronik in die elektronischen Schaltungen der Meßwertaufnehmer verbundene Anwendung von Microprozessoren, erlaubt die Einstellung und/oder Kalibrierung digital, z. B. durch Veränderung der Zählimpulse durchzuführen.

Auch erlaubt es die z. Zt. übliche elektronische Kommunikation zwischen Meßwertaufnehmer und Auswertegerät, die Einstellung und/oder Kalibration des Meßwertaufnehmers von dem Auswertegerät aus vorzunehmen. Dazu sind dann die dafür notwendigen Einrichtungen natürlich in dem Auswertegerät untergebracht.

Aus der DE-PS 27 58 856 ist ein Meßumformer, insbesondere für direktmessende Betriebsanalysegeräte, mit einer der Kalibrierung dienenden Stelleinrichtung in einem Gehäuse bekannt. Bei diesem Meßwertaufnehmer besteht die Gehäusewand aus nichtmagnetischem Material. Ein, mit der Stelleinrichtung verbundener Permanentmagnet ist innerhalb der Gehäusewand angeordnet. Ein weiterer, als äußerer Mitnehmermagnet ausgebildeter Permanentmagnet ist auf die Gehäusewand aufsetzbar, wobei die analoge Verdrehung des äußeren Magneten um einen Winkel seiner Längsachse die Mitnahme des inneren Magneten und damit die Betätigung einer ebenfalls analogen Verstelleinrichtung bewirkt, ohne daß dabei eine Bohrung die Gehäusewand durchdringt oder die nichtmagnetische Wandung geöffnet werden muß.

Die US-PS 4,408,896 zeigt einen gleichzeitigen Korrekturmechanismus für die analoge und digitale Anzeige einer Uhr. Der Korrekturmechanismus umfaßt außer weiteren Bauelementen auch einen mechanischen Analog-Digital-Wandler. Der Analog-Digital-Wandler dient der Aufgabe eines analogen Auslösens von digitalen Schaltvorgängen. Die Vorrichtung ist kompliziert aufgebaut und deshalb teuer in der Herstellung. Der Korrekturmechanismus ist nicht für die Einstellung oder Kalibrierung eines, mit Mikroprozessoren ausgestatteten Meßwertaufnehmers geeignet.

Die EP-A-0 324 067 zeigt einen Meßwertaufnehmer zur Erfassung einer physikalischen Größe, welche in eine äquivalente elektrische Größe umgewandelt wird. Der Meßwertaufnehmer weist einen Speicherbaustein mit integriertem Kennungsgeber auf. Der Kennungsgeber ist über Leitungen mit einer Auswerteschaltung verbunden. Über die Verbindungsleitungen werden Steuerinformationen, Adressen und Daten von der Auswerte schaltung zum Kennungsgeber und vom Kennungsgeber zur Auswerteschaltung übertragen. Eine zusätzliche Leitung dient dem Auslesen oder zusätzlich zum Einlesen von Aufnehmer-Kennungsdaten oder auch Daten zur Kalibrierung oder Rekalibrierung des Meßwertaufnehmers. Bei den, von dem Meßwertaufnehmer zur Auswerteschaltung oder von der Auswerteschaltung zum Meßwert übertragenen Meßwerten bzw. Steuerinformationen, Adressen und Daten handelt es sich um digitalisierte Signale.

Die DE-PS 34 25 752 zeigt eine abgedichtete Potentiometer-Baugruppe, bei welcher ein wellenförmiges Bedienteil die Außenwand des Gehäuses eines Meßwertaufnehmers oder eines Auswertegerätes durchdringt. Im Innern des Meßwertaufnehmers oder des Auswertegerätes sind die elektrischen oder elektronischen Teile auf einer Leiterplatte angeordnet. Die Potentiometer-Baugruppe dient der analogen Einstellung und/oder Kalibrierung des Meßwertaufnehmers. Eine Flammendurchschlagssicherung durch die Gehäusewand ist nicht gegeben.

Der Erfindung liegt die Aufgabe zugrunde, eine Vorrichtung zum analogen Auslösen eines digitalen Einstellvorganges und/oder der Kalibrierung von mit Mikroprozessoren ausgestatteten Meßwertaufnehmern vorzuschlagen, bei welcher die Auslösung des Einstell- und/oder Kalibriervorganges, durch eine einfache analoge Drehbewegung um den Winkel seiner Längsachse, eines, die, die elektrischen/elektronischen Einstellteile von der explosiblen oder aggressiven Atmosphäre trennenden Wandung, durchdringenden Einstellmittel von außen erfolgen kann, die Vorrichtung aus nur wenigen Teilen besteht, bei Montage und Auswechseln der Leiterplatte keiner Einstellung bedarf, und gegen unbeabsichtigtes Verstellen der Parameter geschützt ist.

Gelöst wird diese Aufgabe durch die im unabhängigen Patentanspruch 1 gekennzeichneten Merkmale; die abhängigen Ansprüche enthalten weitere Ausgestaltungen.

Die erfindungsgemäße Vorrichtung bringt weiter den Vorteil, daß die mit der Einstellung betraute Person die digitale Einstellung der Parameter wie gewohnt durch eine analoge Betätigung auslösen kann.

Weitere Vorteile und Merkmale der Erfindung ergeben sich aus der folgenden Beschreibung eines Ausführungsbeispieles, das in den Zeichnungen dargestellt ist.

In den Zeichnungen zeigen
- Fig. 1: einen Schnitt der Seitenansicht der Erfindung von Fig. 1 im eingebauten Zustand.
- Fig. 2: eine schematische Darstellung der erfindungsgemäßen Vorrichtung von Fig. 1 in Vorderansicht.

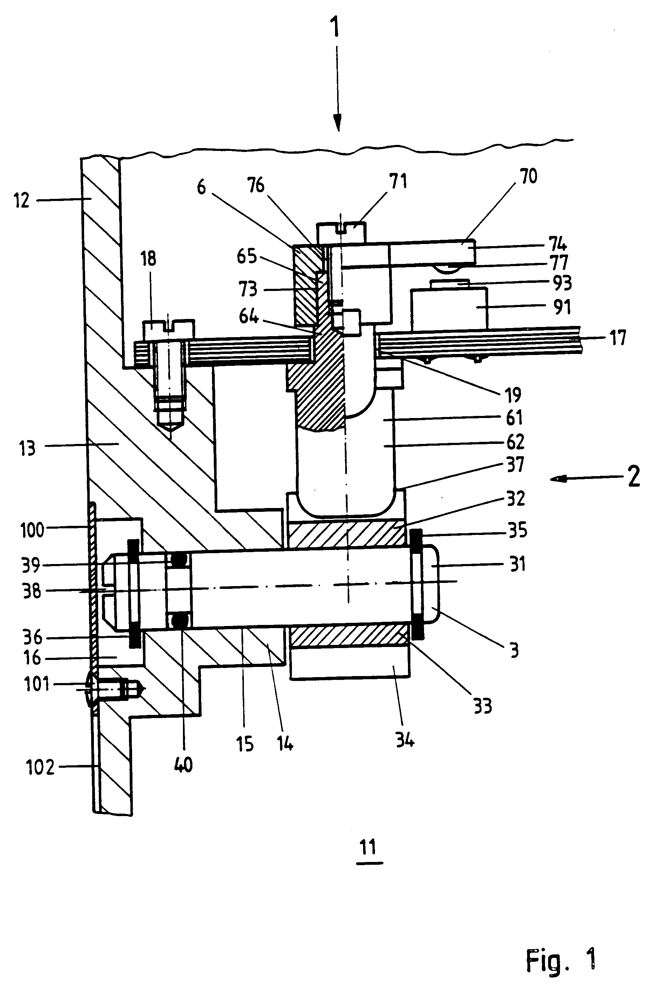

In Fig. 1 ist der Ausschnitt des Gehäuses eines Meßwertaufnehmers 1 dargestellt, dessen Parameter mit der erfindungsgemäßen Vorrichtung 2 eingestellt und/oder kalibriert werden sollen. In jenen Fällen, in denen die Einstellung und/oder Kalibration von einem Auswertegerät aus vorgenommen werden kann, handelt es sich selbstverständlich um einen Auschnitt aus einem solchen Auswertegerät. Der besseren Erklärung wegen, soll jedoch in dem beschriebenen Beispiel von der direkten Einstellung und/oder Kalibrierung eines Meßwertaufnehmers ausgegangen werden.

Die Vorrichtung 2 ist im Innenraum 11 des Meßwertaufnehmers 1 angeordnet. Sie besteht aus einem als Schaltwelle ausgebildetem analogen Bauelement 3, und einem als Schaltwippe ausgebildeten digitalen Bauelement 6, sowie den Drucktastenschaltern 91, 92. Der Innenraum 11 des Meßwertaufnehmers 1, ist von der Gehäusewand 12, durch welche die elektrischen/elektronischen Teile des Meßwertaufnehmers von der explosiblen oder aggressiven Atmosphäre getrennt sind, umschlossen. An der Gehäusewand 12 ist ein Bereich stufenmäßig vergrößerter Wandstärke 13 und die Lagerbuchse 14 angeformt. Innerhalb des Bereiches der vergrößerten Wandstärke 13 und der Lagerbuchse 14 durchdringt eine zylindrische Bohrung 15 die Gehäusewand 12. Auf der Außenseite der Gehäusewand 12 erweitert sich die zylindrische Bohrung 15 zu einer zylindrischen Öffnung 16 größeren Durchmessers. Die zylindrische Öffnung 16 erstreckt sich ein Stück in axialer Richtung der zylindrischen Bohrung 15 und nimmt gegenüber der Bohrung 15 eine solche Lage ein, daß ihre Symmetrieachse mit der, der Bohrung 15 zusammenfällt. In der Bohrung 15 ist eine Welle 31 drehbar gelagert. Die Welle 31 kann in einem spanabhebenden Verfahren, aus Metall, vorzugsweise aus einem rost- und säurebeständigen Stahl hergestellt sein. Die Welle 31 nimmt in der Gehäusewand 12 eine solche Lage ein, daß sie auf der, dem Gehäuseäußeren zugewandten Seite ein Stück in die zylindrische Öffnung 16 der Gehäusewand 12 ragt. Der Lagersitz zwischen zylindrischer Bohrung 15 und Welle 31 ist so gestaltet, daß beide Teile zueinander die Passung eines leichten Laufsitzes bilden.

Für den Einsatz von elektrischen Geräten in explosibler Atmosphäre ist es notwendig, alle stromführenden Teile gegenüber der explosiblen Atmosphäre räumlich abzutrennen. Notwendige Durchführungen durch die trennende Wandung sind so zu gestalten, daß eine Mindestspaltlänge von 12,5 mm und eine maximale Spaltbreite von 80 µm gewährleistet ist. Die angeformte stufenweise Verstärkung 13 der Gehäusewand 12 führt in Verbindung mit der weiterhin angeformten Lagerbuchse 14 zu einer Spaltlänge der von Bohrung 15 und Welle 31 gebildeten Durchführung von über 12,5 mm und die Passung leichter Laufsitz, bildet einen ringförmigen Spalt, welcher unter der zulässigen Maximalspaltbreite von 80 µm liegt, so daß mit der Vorrichtung 2 ausgestattete Meßwertaufnehmer 1 ohne weiteres in explosibler Atmosphäre eingesetzt werden können.

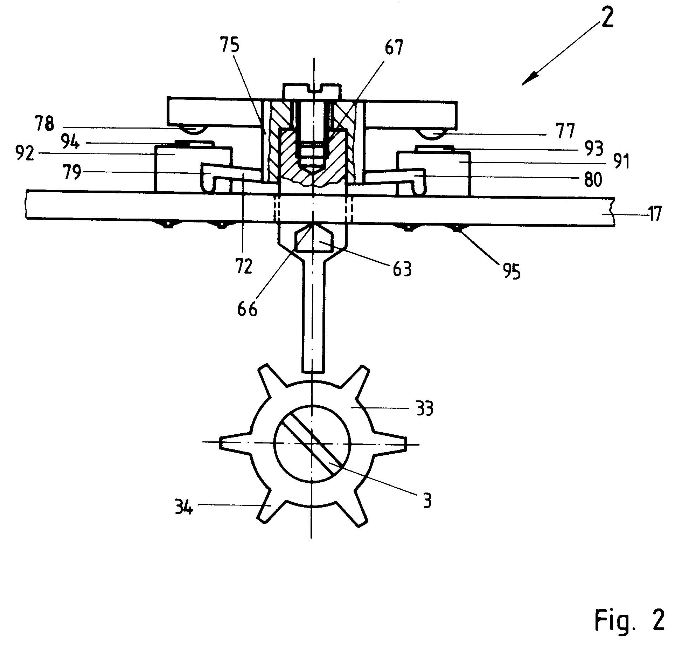

Auf der, dem Gehäuseinneren 11 zugewandten Seite ist mit der Welle 31 ein Nockenrad 32 kraftschlüssig mittels eines Preßsitzes verbunden. Das Nockenrad 32 ist aus einem thermoplastischen Kunststoff großer Härte, Steifigkeit und Temperaturbeständigkeit, vorzugsweise in einem Spritzverfahren aus einem Polyoxymethylen hergestellt. Der Preßsitz zwischen Welle 31 und Nockenrad 32 kann auch derart hergestellt sein, daß das Nockenrad 32 an die Welle 31 während des Spitzvorganges angeformt wird. Das Nockenrad 32 besteht aus der Nabe 33 und den, sich radial erstreckenden Nocken 34. Die Nocken 34 sind so an der Mantelfläche der Nabe 33 angeordnet, daß ihre Symmetrieachsen am Umfang eines Kreises, welcher mit der Mantelfläche der Nabe 33 zusammenfällt, einen gleichen Abstand voneinander haben und sich jeweils zwei Nocken 3 diametral gegenüberliegen (Fig. 2). Die Nocken 34 sind von trapezförmigem Querschnitt und verjüngen sich gleichmäßig in der, von der Mantelfäche der Nabe 33 abgewandten Richtung. Die Nabe 33 und die Nocken 34 sind von gleicher Breite. Die sich radial erstreckenden Längen der Nokken 34 sind so gewählt, daß die Oberkante 37 eine Lage einnimmt, in der sich Nocken 34 und Paddel 62, um mindestens 3/4 der Länge der Nocken 34 überlappen.

Die Welle 31 weist zwei gleiche Wellensicherungsringe 35 und 36 auf, welche in Nuten eingesetzt sind, die zu beiden Enden der Welle 31 deren Mantelfläche durchdringen. Die Wellensicherungsringe 35 und 36 sichern die Lage der Welle 31 in der Gehäusewand 12 gegen ein unbeabsichtigtes Lösen. Auf der, dem Gehäuseäußeren zugewandten Seite verfügt die Welle 31 über eine Nut 38, welche sich entlang der Stirnfläche diametral erstreckt. Sie ist so dimensioniert, daß sie zur Aufnahme der Schneide eines Schraubendrehers geeignet ist. Die Nut 38 dient dem analogen Auslösen des Einstell- und/oder Kalibrierungsvorganges, auf welchem später noch näher eingegangen werden soll. In einem kurzen Abstand von ihrem äußeren Ende ist an der Welle 31 noch eine weitere Nut 39 angeformt, welche zur Aufnahme einer ringförmigen Dichtung 40 dient. Die ringförmige Dichtung 40 kann aus einem handelsüblichen O-Ring gebildet sein und dichtet zusätzlich den Gehäuseinnenraum 11 gegenüber der Umwelt ab.

In dem Innenraum 11 des Meßwertaufnehmers 1 ist weiter die Leiterplatte 17 angeordnet und mittels der Schraubverbindung 18 an der Gehäusewand 12 befestigt. Auf der Leiterplatte 17 sind, nicht dargestellt, die elektronischen Bauteile befestigt, welche die elektrische Schaltung des Meßwertaufnehmers 1 bilden. Sie stehen über nicht dargestellte Leiterbahnen miteinander in elektrischer Verbindung. Auf der Leiterplatte 17 ist auch der nicht dargestellte Mikroprozessor angeordnet, über dessen Programm der Meßwertaufnehmer digital eingestellt und/oder kalibriert werden soll. Auf der Leiterplatte 17 ist noch die, das digitale Bauelement 6 bildende Schaltwippe angeordnet. Die Schaltwippe besteht aus dem Kipphebel 61, dem Schalthebel 70 sowie der Schraube 71. Die Teile Kipphebel 61 und Schalthebel 70 sind jeweils einstückig hergestellt. An dem Kipphebel 61 ist ein Paddel 62 angeformt. Die Lage der Schaltwippe auf der Leiterplatte 17 ist so gewählt, daß das Paddel 62 auf jeden Fall quer zu seiner Breite eine Lage einnimmt, welche zwischen zwei benachbarten Nocken 34 und längs seiner Breite innerhalb der Breite des Nockenrades 32 liegt, und sich parallel zu den Nocken 34 erstreckt.

Der Kipphebel 61 besteht weiter aus dem Kipplager 63 (Fig. 2), dem Zwischenstück 64 sowie dem 4-kt-Zapfen 65. Das Paddel 62 ist von rechteckigem Querschnitt und von einer Breite, welche in etwa das 5-fache seiner Dicke beträgt. Die Länge des Paddels 62 ist wiederum so gewählt, daß das Paddel 62 sich mit den Nocken 34 um mindestens 3/4 der Nockenlänge überlappt. Zur Befestigung der Schaltwippe auf der Leiterplatte 17 durchdringt eine zylindrische Bohrung 19 die Leiterplatte 17, durch welche sich das Zwischenstück 64 erstreckt. Das Zwischenstück 64 ist von kreiszylindrischem Querschnitt und der Durchmesser ist ca. 1 mm kleiner als der Durchmesser der zylindrischen Bohrung 19. Damit ist erreicht, daß sich die Schaltwippe auf der Leiterplatte 17 leicht auslenken kann.

Das dem Kipphebel 61 angeformte Kipplager 63 erstreckt sich diametral von dem Zwischenstück 64 in Richtung der Breite des Paddels 62 und ragt zu beiden Seiten noch ein Stück über die Breite des Paddels 62 hinaus. Auf seiner, der Leiterplatte 17 zugewandten Seite sind an dem Kipplager 63 zwei, in einem Winkel von 60°, zueinander angeordnete Flächen angeformt, welche sich auf der gesamten Breite des Kipplagers 63 erstrecken. Die Schneide 66, zwischen den beiden Flächen, bildet die Auflage und zusammen mit der Leiterplatte 17 den Drehpunkt des digitalen Bauelementes Schaltwippe. Dabei liegt die Schneide 66 gegen die Wirkung der Rückstellfeder 72 (Fig. 2) an der, dem analogen Bauelement Schaltwelle zugewandten Fläche der Leiterplatte 17 an. Auf der dem Paddel 62 abgewandten Seite, ist an dem Kipphebel 61 weiter ein 4-kt-Zapfen 65 angeformt. Er durchdringt eine Aussparung 73 des Schalthebels 70.

Der Schalthebel 70 besteht aus dem Hebel 74 sowie der einstückig angeformten Buchse 75. Die Buchse 75 erstreckt sich so in axialer Richtung des Kipphebels 61, daß die Symmetrieachsen von Kipphebel 61 und Buchse 75 zusammenfallen. Die im Inneren der Buchse 75 gebildete Aussparung 73, ist wie der 4-kt-Zapfen 65 von quadratischem Querschnitt. Die Aussparung 73 erstreckt sich koaxial zur Symmetrieachse der Buchse 75 und durchdringt die Buchse 75 bis fast zu der Höhe des Hebels 74. Der nicht von der Aussparung 73 durchdrungene Bereich des Buchse 75 weist eine Bohrung 76 auf, durch welche die Schraube 71 hindurchgeführt ist. Der 4-kt-Zapfen 65 ist nun seinerseits mit der Gewindebohrung 67 (Fig. 2) versehen, und bildet mit der Schraube 71 eine Schraubverbindung, durch welche der Kipphebel 61 und der Schalthebel 70 fest und formschlüssig miteinander verbunden sind. Ein an dem Zwischenstück 64 des Kipphebels 61 angeformter Bund dient der Festlegung der Lage beider Teile zueinander. Die 4-kt-Passung von 4-kt-Zapfen 65 und gleichförmige Aussparung 73 bilden eine Nut-Federverbindung, welche die Lage der beiden Teile zueinander festlegt und sie gegen Verdrehung sichert.

Der, an der, der Leiterplatte 17 abgewandten Seite, an der Buchse 75 angeformte Hebel 74, erstreckt sich tangential von der Mantelfläche des Buchse 75 ab, so daß seine der Buchse 75 zugewandte Kante, in der Mitte seiner Längserstreckung mit der Mantelfläche des Buchse 75 zusammenfällt. Damit nimmt er eine Lage ein, welche sich neben der Buchse 75 erstreckt. Die Symmetrieachse der Buchse 75 und der Hebel 74 bilden zusammen einen rechten Winkel. Der Hebel 74 ist von rechteckigem Querschnitt. Auf seiner, der Leiterplatte 17 zugewandten Seite sind an dem Hebel 74 in der Nähe seiner beiden Enden kalottenförmige Druckzapfen 77, 78 angeformt.

An der, der Leiterplatte 17 zugewandten Seite der Buchse 75 erstrecken sich weiter diametral angeordnet, die beiden Schenkel 79, 80 der Rückstellfeder 72. Beide Schenkel 79, 80 bilden zur Längsachse der Buchse 75 ebenfalls einen Winkel von 90°. Bei der, in Fig. 2, schematisch dargestellten neutralen Lage, erstrecken sich der Hebel 74 und die beiden Schenkel 79, 80 der Rückstellfeder 72 in etwa parallel zu der Oberfläche der Leiterplatte 17. Dies ist deshalb der Fall, weil die beiden Enden der Federschenkel 79, 80 zur Längsachse ihrer Schenkel einen Winkel von 90° bilden und sich die kurzen abgewinkelten Stücke an der Oberfläche der Leiterplatte 17 abstützen, wodurch das Schaltwippe, digitale Bauelement 6, den dargestellten neutralen Zustand einnimmt. Der Kipphebel 61 und der Schalthebel 70 sind ebenso wie das Nockenrad 32 aus einem thermoplastischen Kunststoff großer Härte, Steifigkeit und Temperaturbeständigkeit, vorzugsweise in einem Spritzverfahren aus einen Polyoxymethylen, hergestellt.

Auf der Leiterplatte 17 sind darüberhinaus 2 Drucktastenschalter 91, 92 bekannter Bauart so angeordnet, daß ihre Drucktasten 93, 94 eine Lage unmittelbar gegenüber den kalottenförmigen Druckzapfen 77, 78 der Schaltwippe einnehmen. An ihrer, der Leiterplatte 17 zugewandten Seite, weisen die Drucktastenschalter 91, 92 Lötfahnen 95 auf, welche mittels Bohrungen durch die Leiterplatte 17 geführt und auf der Unterseite der Leiterplatte 17 mit den nicht dargestellten Leiterbahnen durch Lötung elektrisch verbunden sind. Dabei stellen die Leiterbahnen und die Lötfahnen Abschnitte eines elektrischen Stomkreises dar, welche mittels der Drucktastenschalter 91, 92 geschlossen oder geöffnet werden. Jeder der beiden Drucktastenschalter 91, 92 ist so mit den Leiterbahnen elektrisch verbunden, daß seine Schaltbewegung einen separaten Stromkreis schließt oder öffnet.

Bei der, in Fig. 2 abgebildeten schematischen Darstellung der Erfindung, wurde der besseren Darstellung wegen, die Gehäusewand 12 gänzlich weggelassen. Anhand der Fig. 1 und der schematischen Darstellung von Fig. 2, soll nun die Funktionsweise der erfindungsgemäßen Vorrichtung näher beschrieben werden. Zur Einstellung und/oder Kalibrierung des Meßwertaufnehmers 1 löst die damit beauftragte Bedienungsperson zunächst die den Deckel 100 durchdringende und in der Gehäusewand 12 befestigte Schraube 101. Deckel 100 und Schraube 101 schließen die zylindrische Öffnung 16 gegenüber der Umwelt ab und verhindern das unbeabsichtigte oder auch unbefugte Auslösen eines Einstellvorganges. Nach dem Lösen der Schraube 101 läßt sich der Deckel 100 so entlang der Nut 102 verschieben, daß die zylindrische Öffnung 16 freigegeben und das analoge Bauelement 3, Schaltwelle, der Bedienungsperson zugänglich ist.

Eine von der Bedienungsperson mittels Schraubendreher ausgeführte stufenlose, stetige Drehbewegung von einigen Grad aus der Nullage um seine Längsachse der Welle 31, z. B. nach rechts, führt zu einer Schwenkbewegung der Nocken 34 des mit der Welle 31 festverbundenen Nokkenrades 32 in der Zeichenblattebene von Fig. 2. Die Drehbewegung des analogen Bauelementes 3, Schaltwelle, läßt sich so lange weiterführen, bis einer der Nocken 34 an dem Paddel 62 des Kipphebels 61 ansteht. Wird die Drehbewegung der Welle 31 nun weitergeführt, nimmt der Nocken 34 das Paddel 62 mit und schwenkt den Kipphebel 61 gegen die Wirkung der Rückstellfeder 72 nach rechts um den Drehpunkt 66 aus. Es ist nun leicht erkennbar, daß die, von der Drehbewegung der Welle 31 ausgelöste Kippbewegung des Kipphebels 61, nach rechts in der Zeichenblattebene von Fig. 2, um den Drehpunkt 66 zu einer Kippbewegung des oberhalb des Drehpunktes 66 liegenen Teiles des Kipphebels 61 und des, mit dem Kipphebel 61 formschlüssig verbundenen Hebel 74 nach links führt. Gleichzeitig verändert damit der Hebel 74 seine neutrale Lage parallel zur Oberfläche der Leiterplatte 17 so, daß der Druckzapfen 78 gegen die Drucktaste 94 des Drucktastenschalters 92 gedrückt wird und den Drucktastenschalter 92 betätigt. Damit ist der Stromkreis geschlossen. Das gleichzeitige Hochschwenken des anderen Endes des Hebels 74 mit dem Druckzapfen 77 verhindert, daß beide Drucktastenschalter 91, 92 gleichzeitig betätigt werden können.

Eine Drehbewegung der Welle 31 nach links bewirkt demzufolge, daß der Drucktastenschalter 91 betätigt und damit ein anderer Stromkreis geschlossen wird. Da die Kippbewegung des Kipphebels 61 auch bewirkt, daß je nach Richtung der Kippbewegung der jeweilige Schenkel 79 oder 80 der Rückstellfeder 72 gegen seine Federwirkung verformt wird, stellt sich nach Nachlassen des Druckes auf den Kipphebel 61 der Gleichgewichtszustand des digitalen Bauelementes 6, Schaltwippe, wieder her. D. h., der in Eingriff mit dem Drucktastenschalter befindliche Druckzapfen schwenkt von dem Schalter ab und löst so einen digitalen Schaltvorgang aus, durch welchen der jeweilige Stromkreis wieder unterbrochen wird. Das Schließen oder Öffnen des Stromkreises durch Verdrehen der Welle 31 kann nun dazu ausgenutzt werden. mittels elektrischer Einzelimpulse oder des Auslösens eines im Mikroprozessor gespeicherten Einstellzyklus, die digitale Einstellung und/oder die Kalibrierung des Meßwertaufnehmers 1 auszulösen. Bei dem dargestellten Ausführungsbeispiel schließen die Drucktastenschalter 91 bzw. 92 Stromkreise, die ein Heraufsetzen bzw. Herabsetzen der digitalen Werte eines im Mikroprozessor gespeicherten Wertes auslösen; so daß in Abhängigkeit von der Drehrichtung der Welle 31 der digitale Wert eines Speichers herauf- oder herabgesetzt werden kann.

Wie aus der schematischen Darstellung von Fig. 2 ersichtlich ist, sind zur Auslösung des Einstellvorganges nur zwei Nocken 34 des Nockenrades 32 zur Verschwenkung des Kipphebels 61 notwendig. Die Anordnung weiterer gleichmäßig an dem Umfang der Nabe 33 verteilter Nocken 34 bringt jedoch den Vorteil, daß bei der Montage der Leiterplatte 17 oder nach dem Auswechseln der selben eine Justierung von Nockenrad 32 und Kipphebel 61 entfällt, weil das Paddel 62 des Kipphebels 61 auf jeden Fall eine Lage zwischen zwei benachbarten Nocken 34 einnimmt. Ein weiterer Vorteil ist darin zu sehen, daß ein infolge einer Fehlbedienung verursachtes unbeabsichtigtes Durchrutschen des Paddels 62 über die Oberkante 37 des Nockens 34 hinaus, das Paddel 62 wiederum in eine Lage zwischen zwei benachbarten Nocken 34 bringt und der Einstell- und/oder Kalibriervorgang in jede beliebige Richtung ohne weiteres fortgesetzt werden kann.

## Patentansprüche

1. Vorrichtung (2) zum analogen Auslösen eines digitalen Einstellvorganges, und/oder der Kalibrierung von, mit Microprozessoren ausgestatteten Meßwertaufnehmern (1), mit einer, die Außenwand (12) eines Gehäuses, in dessen Innenraum sich die elektrischen/elektronischen Teile (17) zur Einstellung und/oder Kalibrierung des Meßwertaufnehmers befinden, durchdringenden Einstellwelle (3), d.h. analogen Bauelements
gekennzeichnet durch die folgenden Merkmale:
a) Die Vorrichtung (2) ist aus dem ersten, analogen Bauelement (3) und aus einem, mit dem ersten Bauelement (3) in kraftschlüssiger Verbindung (34), (61) stehenden zweiten, digitalen Bauelement (6) gebildet,
b) das analoge Bauelement (3) steht so mit dem digitalen Bauelement (6) in kraftschlüssiger Verbindung, daß durch die, außerhalb der Gehäusewand (12) ausgeführten Drehbewegung des analogen Bauelementes (3) aus einer Nullage um seine Längsachse, eine Kippbewegung des im Inneren (11) des Meßwertaufnehmers (1) auf einer Leiterplatte (17) angeordneten digitalen Bauelementes (6) ausgelöst, und durch die Betätigung wenigstens eines Drucktastenschalters (91), wenigstens ein Stromkreis zur Einstellung und/oder Kalibrierung des Meßwertaufnehmers (1) geschlossen oder geöffnet wird.

2. Vorrichtung nach Anspruch 1, dadurch gekennzeichnet, daß das erste, analoge Bauelement (3) aus einer Einstellwelle gebildet ist, eine Welle (31) und ein Nockenrad (32) aufweist, und um seine Längsachse drehbar in der Gehäusewand 12 gelagert ist.

3. Vorrichtung nach Anspruch 2, dadurch gekennzeichnet, daß die Welle (31) aus Metall, vorzugsweise aus einem rost- und säurebeständigen Stahl besteht.

4. Vorrichtung nach Anspruch 3, dadurch gekennzeichnet, daß die Welle (31), auf ihrer dem Gehäuseinneren (11) abgewandten Seite, Mittel (38) zur Auslösung des Einstell- oder Kalibriervorganges aufweist.

5. Vorrichtung nach Anspruch 2, dadurch gekennzeichnet, daß die, aus der Welle (31) und der Gehäusewand (12) gebildete Passung als leichter Laufsitz ausgebildet ist.

6. Vorrichtung nach Anspruch 2, dadurch gekennzeichnet, daß die, aus der Welle (31) und der Gehäusewand (12) gebildete Passung als Flammendurchschlagsicherung ausgebildet ist.

7. Vorrichtung nach Anspruch 2, dadurch gekennzeichnet, daß das Nockenrad (32) mittels Preßsitz kraftschlüssig auf der, dem Gehäuseinneren (11) zugewandten Seite, auf der Welle (31) angeordnet ist.

8. Vorrichtung nach Anspruch 2, dadurch gekennzeichnet daß das Nockenrad (32) wenigstens 2 Nocken (34) aufweist, welche im Abstand voneinander an dem Umfang der Nabe (33) des Nockenrades (32) angeordnet sind, und sich radial von der Nabe (33) des Nockenrades (32) erstrecken.

9. Vorrichtung nach Anspruch 8, dadurch gekennzeichnet, daß die Nocken (34) von trapezförmigem Querschnitt sind und eine Länge aufweisen, so daß sie mindestens um 3/4 ihrer Länge von dem Paddel (62) des digitalen Bauelementes (6) überlappt werden.

10. Vorrichtung nach Anspruch 7 - 9, dadurch gekennzeichnet, daß das Nockenrad (32) aus einem thermoplastischen Kunststoff besteht und vorteilhaft in einem Spritzverfahren aus einem Polyoxymethylen hergestellt ist.

11. Vorrichtung nach Anspruch 1, dadurch gekennzeichnet, daß das zweite, digitale Bauelement (6) aus einer Schaltwippe gebildet ist.

12. Vorrichtung nach Anspruch 11, dadurch gekennzeichnet, daß die Schaltwippe des digitalen Bauelementes (6) aus einem Kipphebel (61) und einem Schalthebel (70) besteht, der Kipphebel (61) sowie der Schalthebel (70) mittels einer als Schraubverbindung (67), (71) ausgebildeten Nut-Federverbindung (65), (73) in formschlüssiger Verbindung stehen, und um den gemeinsamen Drehpunkt (66) kippbar an der Leiterplatte (17) angeordnet ist.

13. Vorrichtung nach Anspruch 12, dadurch gekennzeichnet, daß der Kipphebel (61) einstückig aus den Bereichen Paddel (62), Kipplager (63), zylindrischem Zwischenstück (64) und 4-kt-Zapfen (65) besteht, das zylindrische Zwischenstück (64) so eine Bohrung (19) der Leiterplatte (17) durchdringt, daß sich das Kipplager (63) gegen die Wirkung der Rückstellfeder (72) an der Leiterplatte (17) abstützt.

14. Vorrichtung nach Anspruch 13, dadurch gekennzeichnet, daß das Paddel (62) des Kipphebels (61) von rechteckigem Querschnitt ist und eine Länge aufweist, so daß ihr, dem Nockenrad (32) zugewandtes Ende, von mindestens 3/4 der Länge der Nocken (34) überlappt wird.

15. Vorrichtung nach Anspruch 13, dadurch gekennzeichnet, daß sich das an den Kipphebeln (61) angeformte Kipplager (63) etwas über die Breite des Paddels (62) erstreckt.

16. Vorrichtung nach Anspruch 12, dadurch gekennzeichnet, daß der Schalthebel (70) einstückig aus den Bereichen Hebel (74), Buchse (75), Rückstellfeder (72) gebildet ist, und die Buchse (75) von einer Aussparung (73) quadratischem Querschnittes teilweise durchdrungen ist.

17. Vorrichtung nach Anspruch 16, dadurch gekennzeichnet, daß der Schalthebel (70) einen Hebelarm (74) aufweist, welcher sich tangential von der Buchse (75) erstreckt und an seinen beiden Enden Druckzapfen (77), (78) aufweist.

18. Vorrichtung nach Anspruch 16, dadurch gekennzeichnet, daß die Rückstellfeder (72) sich diametral zu beiden Seiten der Buchse (75) erstreckt, die beiden Schenkel (79), (80) bildet, die Schenkel (79,80) an ihren Enden rechtwinklig abgebogen sind und sich die Rückstellfeder (72) mit dem abgebogenen Enden gegen ihre Federwirkung auf der Oberfläche der Leiterplatte (17) abstützt.

19. Vorrichtung nach einem der Ansprüche 11 bis 18, dadurch gekennzeichnet,
daß die, das digitale Bauelement (6) bildende Schaltwippe mit den Teilen Kipphebel (61) und Schalthebel (70) aus einem thermoplastischen Kunststoff, vorteilhaft in einem Spritzverfahren aus einem Polyoxymethylen, hergestellt ist.

20. Vorrichtung nach Anspruch 1 und 17, dadurch gekennzeichnet, daß auf der Leiterplatte (17), bereits bekannte Drucktastenschalter (91), (92) so angeordnet sind, daß sich ihre Drucktasten (93), (94) und die Druckzapfen (77), (78) des Schalthebels (70) einander gegenüberliegen.

21. Vorrichtung nach Anspruch 1, dadurch gekennzeichnet, daß die Drucktastenschalter (91), (92) zusammen mit Lötfahnen (95) und auf der Leiterplatte (17) angeordneten Leiterbahnen, Abschnitte mindestens eines elektrischen Schaltkreises zur digitalen Einstellung und/oder Kalibrierung des Meßwertaufnehmer (1) sind.

22. Vorrichtung nach Anspruch 1, dadurch gekennzeichnet, daß die Längsachen der Welle (31) des analogen Bauelementes (3) und der Schaltwippe des digitalen Bauelementes (6) zusammen einen Winkel von 90° bilden.

23. Vorrichtung nach Anspruch 9 und 14, dadurch gekennzeichnet, daß das Paddel (62) eine Lage zwischen zwei Nocken (34) und innerhalb der Breite des Nockenrades (32) einnimmt.

24. Vorrichtung nach Anspruch 1, 2, 8, 9, 12, und 19, dadurch gekennzeichnet, daß die Drehbewegung des analogen Bauelementes (33) Einstellwelle, den Nocken (34) des Nockenrades (32) gegen das Paddel (62) des digitalen Bauelementes (6), Schaltwippe, führt, das Paddel (62) auslenkt, die Kippbewegung der Schaltwippe um den Drehpunkt (66) bewirkt, den Druckzapfen (77) der Schaltwippe mit der Drucktaste (93), des auf der Leiterplatte (17) angeordneten Drucktastenschalters (91) in Eingriff bringt, den Drucktastenschalter (91) schaltet und einen zur Einstellung und/oder Kalibrierung notwendigen Stromkreis schließt oder öffnet.

25. Vorrichtung nach Anspruch (2), dadurch gekennzeichnet, daß die Gehäusewand (12), Mittel (16), (100), (101), (102) aufweist, welche ein unbefugtes oder unbeabsichtigtes Auslösen des Einstell- oder Kalibriervorganges verhindern.

26. Vorrichtung nach Anspruch 25, dadurch gekennzeichnet, daß die Mittel, (100), (101), von der Gehäusewand (12) lösbar oder auf ihr verschiebbar sind.

## Claims

1. A device (2) for the analog initiation of a digital setting operation and/or the calibration of transducers (1) equipped with microprocessors, comprising an adjusting shaft (3), i.e., an analog component, extending through the outer wall (12) of a housing containing in its interior the electrical/electronic components (17) for setting and/or calibrating the transducer,
characterized by the following features:
a) The device (2) is formed from the first, analog component (3) and a second, digital component (6) which is nonpositively connected (34, 61) with the first component (3);
b) the analog component (3) is nonpositively connected with the digital component (6) in such a way that the rotary motion of the analog component (3) from a zero position about its longitudinal axis, performed outside the housing wall (12), will initiate a rocking motion of the digital component (6) mounted in the interior (11) of the transducer (1) on a printed circuit board (17), and that by operating at least one push-button switch (91), at least one electric circuit is closed or opened for setting and/or calibrating the transducer (1).

2. A device as claimed in claim 1, characterized in that the first, analog component (3) is designed as an adjusting shaft, comprises a shaft (31) and a cam wheel (32), and is mounted in the housing wall (12) so as to be rotatable about its longitudinal axis.

3. A device as claimed in claim 2, characterized in that the shaft (31) is made of metal, preferably stainless and acid-resistant steel.

4. A device as claimed in claim 3, characterized in that on its side remote from the interior (11) of the housing, the shaft (31) has means (38) for initiating the setting or calibrating operation.

5. A device as claimed in claim 2, characterized in that the fit between the shaft (31) and the housing wall (12) is a free fit.

6. A device as claimed in claim 2, characterized in that the fit between the shaft (31) and the housing wall (12) is designed to provide flame protection.

7. A device as claimed in claim 2, characterized in that the cam wheel (32) is nonpositively press-fitted to the shaft (31) on the side facing toward the interior (11) of the housing.

8. A device as claimed in claim 2, characterized in that the cam wheel (32) has at least two cams (34) which are spaced along the circumference of the hub (33) of the cam wheel (32) and extend radially from the hub (33) of the cam wheel (32).

9. A device as claimed in claim 8, characterized in that the cams (34) have a trapezoidal cross section and a length such that at least 3/4 of their length are overlapped by the paddle (62) of the digital component (6).

10. A device as claimed in claims 7 to 9, characterized in that the cam wheel (32) is made of a thermoplastic material, preferably from a polyoxymethylene by an injection-molding process.

11. A device as claimed in claim 1, characterized in that the second, digital component (6) is constituted by a rocker.

12. A device as claimed in claim 11, characterized in that the rocker of the digital component (6) consists of a rocking lever (61) and an actuating lever (70), that the rocking lever (61) and the actuating lever (70) are positively interconnected via a tongue and groove (65, 73) designed as a screw joint (67, 71), and that the rocker is arranged to pivot about the common fulcrum (66) at the printed circuit board (17).

13. A device as claimed in claim 12, characterized in that the rocking lever (61) is formed integrally and consists of the portions paddle (62), pivot bearing (63), cylindrical adapter (64), and square pin (65), and that the cylindrical adapter (64) extends through a hole (19) in the printed circuit board (17) in such a way that the pivot bearing (63) is supported by the printed circuit board (17) against the action of the restoring spring (72).

14. A device as claimed in claim 13, characterized in that the paddle (62) of the rocking lever (61) has a rectangular cross section and a length such that its end facing toward the cam wheel (32) is overlapped by at least 3/4 of the length of the cams (34).

15. A device as claimed in claim 13, characterized in that the pivot bearing (63), which is formed integrally with the rocking levers (61), extends somewhat beyond the length of the paddle (62).

16. A device as claimed in claim 12, characterized in that the actuating lever (70) is formed integrally and consists of the portions lever (74), bushing (75), and restoring spring (72), and that a recess (73) of square cross section extends through part of the bushing (75).

17. A device as claimed in claim 16, characterized in that the actuating lever (70) comprises a lever arm (74) which extends tangentially from the bushing (75) and has bosses (77, 78) on both of its ends.

18. A device as claimed in claim 16, characterized in that the restoring spring (72) extends diametrically on both sides of the bushing (75), forming two legs (79, 80), that the legs (79, 80) are bent at right angles at their ends, and that the restoring spring (72) rests with the angled ends on the surface of the printed circuit board (17) against its spring action.

19. A device as claimed in any one of claims 11 to 18, characterized in that the rocker forming the digital component (6), consisting of the parts rocking lever (61) and actuating lever (70), is made of a thermoplastic material, preferably from polyoxymethylene by an injection-molding process.

20. A device as claimed in claims 1 and 17, characterized in that conventional push-button switches (91, 92) are so arranged on the printed circuit board (17) that their pushbuttons (93, 94) and the bosses (77, 78) of the actuating lever (70) are located opposite one another.

21. A device as claimed in claim 1, characterized in that the push-button switches (91, 92), together with soldering lugs (95) and conductor paths arranged on the printed circuit board (17), are portions of at least one electric circuit for digitally setting and/or calibrating the transducer (1).

22. A device as claimed in claim 1, characterized in that the longitudinal axes of the shaft (31) of the analog component (3) and the rocker of the digital component (6) form an angle of 90°.

23. A device as claimed in claims 9 and 14, characterized in that the paddle (62) occupies a position between two cams (34) and within the width of the cam wheel (32).

24. A device as claimed in claims 1, 2, 8, 9, 18, and 19, characterized in that the rotary motion of the analog component (3), adjusting shaft, moves the cam (34) of the cam wheel (32) against the paddle (62) of the digital component (6), rocker, deflects the paddle (62), causes the rocking motion of the rocker about the fulcrum (66), moves the boss (77) of the rocker into engagement with the push button (93) of the push-button switch (91) mounted on the printed-circuit board (17), actuates the push-button switch (91), and closes or opens an electric circuit required for setting and/or calibration.

25. A device as claimed in claim 2, characterized in that the housing wall (12) contains means (16, 100, 101, 102) which prevent an unauthorized or unintended initiation of the setting or calibrating operation.

26. A device as claimed in claim 25, characterized in that the means (100, 101) are detachable from or movable on the housing wall (12).

## Revendications

1. Dispositif (2) pour le déclenchement analogique d'un processus de réglage numérique et/ou du calibrage de transducteurs (1) équipés de microprocesseurs, comportant un arbre de réglage (3) qui traverse la paroi externe (12) d'un boîtier à l'intérieur duquel se trouvent les parties électriques/électroniques (17) pour le réglage et/ou l'étalonnage du transducteur, c'est à dire un composant analogique, caractérisé par les particularités suivantes :
a) Le dispositif (2) est constitué du premier composant analogique (3) et d'un deuxième composant numérique (6) relié au premier composant (3) par une liaison (34),(61) fonctionnant sous l'action d'une force,
b) le composant analogique (3) est relié au composant numérique (6) par une liaison fonctionnant sous l'action d'une force de telle façon que le mouvement de rotation du composant analogique (3) exécuté à l'extérieur de la paroi (12) du boîtier à partir d'une position zéro autour de son axe longitudinal déclenche un mouvement de bascule du composant numérique (6) disposé à l'intérieur (11) du transducteur (1) sur une carte imprimée (17), et que, par l'actionnement d'au moins un interrupteur à bouton-poussoir (91), on ferme ou on ouvre au moins un circuit pour le réglage et / ou l'étalonnage du transducteur (1).

2. Dispositif selon la revendication 1, caractérisé en ce que le premier composant analogique (3) est constitué d'un arbre de réglage, comporte un arbre (31) et une roue à cames (32) et est monté de façon à pouvoir tourner autour de son axe longitudinal dans la paroi du boîtier (12).

3. Dispositif selon la revendication 2, caractérisé en ce que l'arbre (31) est en métal, de préférence en un acier résistant à la rouille et résistant aux acides.

4. Dispositif selon la revendication 3, caractérisé en ce que l'arbre (31) a, du côté opposé à l'intérieur du boîtier (11), un organe (38) pour le déclenchement du processus de réglage ou d'étalonnage.

5. Dispositif selon la revendication 2, caractérisé en ce que l'ajustement formé par l'arbre (31) et la paroi (12) du boîtier est conçu comme un ajustement tournant simple.

6. Dispositif selon la revendication 2, caractérisé en ce que l'ajustement formé par l'arbre (31) et de la paroi (12) du boîtier est conçu comme une sécurité contre le passage des flammes.

7. Dispositif selon la revendication 2, caractérisé en ce que la roue à cames (32) est disposée au moyen d'un ajustement serré par adhérence sur l'arbre (31) du côté opposé à l'intérieur (11) du boîtier.

8. Dispositif selon la revendication (2), caractérisé en ce que la roue à cames (32) a au moins 2 cames (34) qui sont disposées à distance l'une de l'autre à la périphérie du moyeu (33) de la roue à cames (32) et s'étendent radialement par rapport au moyeu (33) de la roue à cames (32).

9. Dispositif selon la revendication 8, caractérisé en ce que les cames (34) ont une section trapézoidale et ont une longueur telle qu'elles sont recouvertes sur au moins les 3/4 de leur longueur par la palette (62) du composant numérique (6).

10. Dispositif selon l'une des revendications 7 à 9, caractérisé en ce que la roue à cames (32) est en un plastique thermodurcissable et est fabriquée de préférence par un procédé d'injection avec un polyoxyméthylène.

11. Dispositif selon la revendication 1, caractérisé en ce que le deuxième composant numérique (6) est constitué d'une bascule de commutation.

12. Dispositif selon la revendication 11, caractérisé en ce que la bascule de commutation du composant numérique (6) comprend un levier basculant (61) et un levier de commutation (70), en ce que le levier basculant (61) et le levier de commutation (70) sont reliés par un assemblage par conjugaison de formes au moyen d'un assemblage à rainure et languette (65), (73) conçu comme un assemblage vissé (67, (71), et sont disposés sur la carte imprimée (17) de façon à pouvoir basculer autour du point de rotation commun (66).

13. Dispositif selon la revendication 12, caractérisé en ce que le levier basculant (61) est formé d'un seul tenant par les régions palette (62), palier basculant (63), pièce intercalaire cylindrique (64) et tenon carré (65), et en ce que la pièce intercalaire cylindrique (64) traverse un trou (19) de la carte imprimée (17) de telle façon que le palier basculant (63) s'appuie contre l'effet du ressort de rappel (72) sur la carte imprimée (17).

14. Dispositif selon la revendication 13, caractérisé en ce que la palette (62) du levier basculant (61) a une section rectangulaire et une longueur telle que son extrémité opposée à la roue à cames (32) est recouverte par au moins les 3/4 de la longueur des cames (34).

15. Dispositif selon la revendication 13, caractérisé en ce que le palier basculant (63) formé sur les leviers basculant (61) s'étend sensiblement sur la largeur de la palette (62).

16. Dispositif selon la revendication 12, caractérisé en ce que le levier de commutation (70) est formé d'un seul tenant par les régions levier (74), douille (75), ressort de rappel (72), et en ce que la douille (75) est traversée en partie par un évidement (73) de section carrée.

17. Dispositif selon la revendication 16, caractérisé en ce que le levier de commutation (70) a un bras de levier (74) qui s'étend tangentiellement depuis la douille (75) et a des tenons presseurs (77), (78) à ses deux extrémités.

18. Dispositif selon la revendication 16, caractérisé en ce que le ressort de rappel (72) s'étend diamétralement des deux côtés de la douille (75), en ce qu'il constitue les deux branches (79), (80), en ce que les branches (79,80) sont coudées à angle droit à leurs extrémités et en ce que le ressort de rappel (72) avec les extrémités coudées s'appuie contre son effet de ressort sur la surface de la carte imprimée (17).

19. Dispositif selon l'une des revendications 11 à 18, caractérisé en ce que la bascule de commutation constituant le composant numérique (6) est, avec les pièces levier basculant (61) et levier de commutation (70), fabriquée dans un plastique thermodurcissable, de préférence par un procédé d'injection à partir d'un polyoxyméthylène.

20. Dispositif selon les revendications 1 et 17, caractérisé en ce que des interrupteurs à bouton-poussoir (91), (92) déjà connus sont disposés sur la carte imprimée (17) de telle façon que leurs boutons-poussoirs (93), (94) et les tenons presseurs (77), (78) du levier de commutation (70) se trouvent face à face.

21. Dispositif selon la revendication 1, caractérisé en ce que les interrupteurs à bouton-poussoir (91), (92) associés à des cosses à braser (95) et à des pistes conductrices disposées sur la carte imprimée (17) sont des tronçons d'au moins un circuit électrique de commutation pour le réglage et/ou l'étalonnage numérique du transducteur (1).

22. Dispositif selon la revendication 1, caractérisé en ce que les axes longitudinaux de l'arbre (31) du composant analogique (3) et de la bascule de commutation du composant analogique (6) forment ensemble un angle de 90°.

23. Dispositif selon les revendications 9 et 14, caractérisé en ce que la palette (62) occupe une position entre deux cames (34) et dans les limites de la largeur de la roue à cames (32).

24. Dispositif selon les revendications 1, 2, 6, 9, 12 et 14, caractérisé en ce que le mouvement de rotation de l'arbre de réglage du composant analogique (3) guide la came (34) de la roue à cames (32) contre la palette (62) de la bascule de commutation du composant numérique (6), dévie la palette (62), entraîne le mouvement basculant de la bascule de commutation autour du point de rotation (66), met en prise le tenon presseur (77) de la bascule de commutation avec le bouton-poussoir (93) de l'interrupteur à bouton-poussoir (91) disposé sur la carte imprimée (17), commute l'interrupteur à bouton-poussoir (91) et ferme ou ouvre un circuit nécessaire pour le réglage et/ou l'étalonnage.

25. Dispositif selon la revendication 2, caractérisé en ce que la paroi (12) du boîtier a des organes (16), (100), (101), (102), qui empêchent un déclenchement non autorisé ou involontaire du processus de réglage ou d'étalonnage.

26. Dispositif selon la revendication 25, caractérisé en ce que les organes (100), (101) peuvent être détachés de la paroi (12) du boîtier ou être déplacés sur elle.
